# EUROPÄISCHE PATENTSCHRIFT

(11) **EP 3 488 320 B1**
(45) Veröffentlichungstag und Bekanntmachung des Hinweises auf die Patenterteilung: **19.01.2022**
(21) Anmeldenummer: 17736660.6
(22) Anmeldetag: 06.07.2017
(51) Int. Cl.: G06F 3/01, B60K 35/00, B60K 37/06, G06F 3/03, H04S 7/00, G06F 3/0484, G06F 3/038

(54) **VORRICHTUNG UND VERFAHREN ZUR UNTERSTÜTZUNG EINES ANWENDERS**
DEVICE AND METHOD FOR ASSISTING A USER
DISPOSITIF ET PROCÉDÉ D'ASSISTANCE À UN UTILISATEUR

(30) Priorität: 21.07.2016 DE 102016213313
(43) Veröffentlichungstag der Anmeldung: 29.05.2019
(73) Patentinhaber: Bayerische Motoren Werke Aktiengesellschaft, 80809 München (DE)
(72) Erfinder: TOPTSIS, Ioannis, 81825 München (DE)
(86) Internationale Anmeldenummer: PCT/EP2017/066854
(87) Internationale Veröffentlichungsnummer: WO 2018/015165

(56) Entgegenhaltungen:
- EP-A1- 2 389 016
- DE-A1-102011 116 312
- DE-A1-102013 012 466
- DE-A1-102015 013 777
- DE-U1-202012 005 255
- US-A1- 2014 096 003
- US-A1- 2014 277 936

## Beschreibung

Die Erfindung betrifft eine Vorrichtung sowie ein Verfahren zur Unterstützung eines Anwenders bei der Ansteuerung einer Funktion eines Audio- und/oder Entertainment-system, wie in den unabhängigen Ansprüchen beschrieben.

Insbesondere betrifft die vorliegende Erfindung die Unterstützung eines Führers eines Fortbewegungsmittels, vorzugsweise eines Fahrers eines Kraftfahrzeugs oder eines Piloten eines Flugzeugs, beim berührungslosen Bedienen einer Fortbewegungsmittel-basierten Anwenderschnittstelleneinheit eines Anwendungssystems während des Führens des Fortbewegungsmittels.

Im Stand der Technik hat sich die Bedienung von Anwenderschnittstellen, insbesondere von Mensch-Maschine-Schnittstellen (englisch: man-machineinterface, abgekürzt: MMI), zunehmend weiterentwickelt, weg von der herkömmlich haptischen Bedienung, beispielsweise mittels Schaltern und Knöpfen, hin zu zunehmend intelligenten, interaktiven Systemen. So erfolgt in modernen Fortbewegungsmitteln, wie insbesondere Kraftfahrzeugen, die Bedienung von Funktionen oder Betriebszuständen von Systemkomponenten des Fahrzeugs, wie von Audio-, Entertainment- und Informationssystemen, durch den Führer, insbesondere den Kraftfahrzeugfahrer, nicht nur mithilfe von haptischen Bedienelementen, sondern vielfach bereits durch virtuelle Bedienelemente wie sogenannte Joysticks, Touch Screens (berührungsempfindliche Bildschirme) sowie Gestikerkennungs-basierte Bedienelemente. Die Gestikerkennung kann dabei beispielsweise die Interpretation verschiedener Hand- bzw. Fingerstellungen umfassen, welche mittels einer 2D- oder 3D-Kamera erfasst werden.

KR 10 1260053 B1 offenbart ein intelligentes Fahrzeugsteuergerät und ein zugehöriges Verfahren unter Auswertung von Bewegung und Stimme des Fahrers ohne Störung des Fahrbetriebs, indem ein Fahrzeugsteuerbefehl durch die Kombination von einer Spracherkennungs-technik mit einer Bewegungserkennungseinheit bestimmt wird. So erkennt ein Spracherkennungsmodul einen vom Mikrophon empfangenen Sprachbefehl auf Basis einer von einem Bewegungserkennungsmodul erkannten Handbewegung.

DE 10 2006 009 291 A1 offenbart ein Verfahren und eine Vorrichtung zum Betreiben von zumindest zwei Funktionskomponenten eines Systems, bei dem eine der Funktionskomponenten, beispielsweise eine Komfort- und/oder Entertainment-Funktion, zum weiteren Bedienen durch zumindest ein spezifisch zugeordnetes akustisches Signal, vorzugsweise ein Sprachsignal, vorausgewählt wird.

DE 10 2015 013 777 A1 offenbart ein Verfahren zum Bedienen einer mittels eines Aktors betätigbaren Einheit mittels einer Gestensteuerung in einem Fortbewegungsmittel. Positionen, welche die betätigbare Einheit einnehmen sollen, können über die Anwendergesten unmittelbar im Raum definiert werden.

US 2014/0277936 A1 offenbart ein Fahrzeug mit einer gestenbasierten Anwenderschnittstelle, bei welcher frei im Raum ausgeführte Gesten zur Bedienung von Fahrzeugkomponenten erkannt werden. Eine Bezeichnung der zu bedienenden Komponente erfolgt über ein Sprachkommando des Anwenders.

DE 10 2011 116 312 A1 offenbart eine Eingabevorrichtung zum Steuern eines elektronischen Gerätes, welche ein an der Hand des Anwenders getragenes Gerät und einen Empfänger umfasst, mittels welcher ein Multifunktionsdisplay eines Kraftfahrzeugs per Gestensteuerung bedient werden kann. Die Funktionalität wird mittels eines Sprachbefehls ausgewählt und in Abhängigkeit der Geste aktiviert.

DE 20 2012 005 255 U1 offenbart eine Bedienvorrichtung mit einer Gestenüberwachungseinheit zur Bedienung von Küchengeräten und Fortbewegungsmitteln. Zunächst wird eine Aktivierungsgeste zum Starten der Gestenerkennung erkannt und anschließend eine Betätigungseinheit durch eine Zeigegeste mit dem Finger ausgewählt.

Die im Stand der Technik beschriebenen Bedienschritte schöpfen jedoch nur unvollständig das Potenzial zur intuitiven Bedienung einer berührungslosen Anwenderschnittstelleneinheit eines Anwendungssystems aus.

Es ist daher einer Aufgabe der vorliegenden Erfindung, einem Anwender weitere Möglichkeiten bereitzustellen, mit einer berührungslosen Anwenderschnittstelleneinheit eines oder mehrerer Anwendungssysteme eines Fortbewegungsmittels intuitiv und effizient zu kommunizieren. Es stellt somit eine weitere Aufgabe dar, mehrere Bedienschritte in geeigneter Weise vereinfachend zusammenzufassen respektive zu restrukturieren. Damit liegt ein Aufgabenaspekt der vorliegenden Erfindung darin, die Potenziale von intuitiven oder zumindest leicht dem Anwender eingängigen Bedienschritten auszuschöpfen.

### Offenbarung der Erfindung

Die vorstehend genannte Aufgabe wird erfindungsgemäß gelöst durch ein erfindungsgemäßes Verfahren sowie durch eine zugehörige Vorrichtung zur Ansteuerung einer Funktion eines Anwendungssystems eines Fortbewegungsmittels, insbesondere eines Kraftfahrzeugs, wie in den unabhängigen Ansprüchen beschrieben. Die abhängigen Ansprüche beschreiben vorteilhafte Ausführungsformen. Das Fortbewegungsmittel kann beispielsweise ein Pkw, ein Transporter, ein Lkw, ein Nutzfahrzeug, ein Luft- und/oder Wasser- und/oder Unterwasserfahrzeug sein. Dazu umfasst das erfindungsgemäße Verfahren die Schritte: (i) sensorisches Erkennen einer dreidimensional im Raum von einem Anwender ausgeführten und mittels eines Sensors erfassten Zeigegeste; (ii) automatisches Zuordnen einer durch die Zeigegeste adressierten Raumposition an dem und/oder innerhalb des Fortbewegungsmittels; und im Ansprechen darauf: (iii) Ansteuern der Funktion in Abhängigkeit von der adressierten Raumposition.

Im ersten Schritt wird eine frei im Raum, als sogenannte "3D-Geste", mit einem Zeigemittel ausgeführte Zeigegeste erfasst. Die Zeigegeste dient also nicht der Berührung von haptischen und/oder sensorischen Elementen (Touchscreen, Schalter, Knopf o.ä.), sondern wird berührungslos sensorisch erfasst und erkannt. Die Zeigegeste zeigt auf die Raumposition selbst, wodurch diese durch die Zeigegeste "adressiert" wird. Unter "Adressieren" der Raumposition ist im Rahmen der Erfindung zu verstehen, dass auf diese verwiesen und/oder hingewiesen wird und/oder dass diese bedeutet, intendiert, definiert, indiziert und/oder angezeigt wird. Die Zeigegeste zeigt also nicht auf ein (beispielsweise auf einem Bildschirm) dargestelltes Abbild bzw. Sinnbild für die Raumposition. Zeigemittel umfassen zumindest einen Finger und/oder zumindest eine Hand eines Anwenders und/oder einen Signalgeber, vorzugsweise einen Pointer und/oder ein RFID-Label, und/oder einen Spezialhandschuh. Beispielsweise kann die Zeigegeste hierzu mittels eines Sensors, beispielsweise mittels einer auf den Innenraum gerichteten optischen 2D- und oder 3D-Kameras, des Fortbewegungsmittels erfasst werden. Alternativ oder zusätzlich kann die Analyse der Zeigegeste beispielsweise durch ein vom Anwender, beziehungsweise am Handgelenk, getragenes mobiles Endgerät durchgeführt oder unterstützt werden. Beispiele für geeignete Endgeräte sind sogenannte "Smart-Devices", welche beispielsweise mit Lage- beziehungsweise Beschleunigungssensoren versehen und zur drahtlosen Kommunikation vorgesehen sind.

Im zweiten Schritt wird anhand der durch die Zeigegeste bedeuteten Kontextinformation eine Raumposition an dem und/oder innerhalb des Fortbewegungsmittels mittels automatischer Analyse und Erkennung zugeordnet. Bei der vorliegenden Erfindung wird die mit der Zeigegeste adressierte Raumposition in Form von Sitzpositionen segmentiert.

Die automatische Analyse und Erkennung kann durch eine Auswerteeinheit, beispielsweise ein Steuergerät, des Fortbewegungsmittels erfolgen. In jedem Fall kann die Erfindung mit üblicherweise ohnehin vorhandener Hardware oder zumindest nur geringfügigen Zusatzinstallationen realisiert werden.

Daraufhin spricht im dritten Schritt eine Steuereinheit an. Es wird eine Ansteuerung einer Funktion eines Anwendungssystems des Fortbewegungsmittels veranlasst. In der vorliegenden Erfindung ist diese Funktion eine Optimierung der akustischen Einstellungen eines Audio- und/oder Entertainmentsystems. Bei anderen Ausführungsformen, die nicht in den Umfang der Ansprüche fallen, kann es sich bei dem Anwendungssystem um andere Systeme handeln, beispielsweise um Beleuchtungssysteme, um Bewegungssteuerungseinrichtungen, um

Komfort-Systeme und/oder um eine Klimaanlage.

Als Zeigegesten oder deiktische Gesten werden im Rahmen der Erfindung solche aufgefasst, welche einen Bezug auf Personen, Orte, Gegenstände, insbesondere auf eine Raumposition an dem und oder innerhalb des Fortbewegungsmittels, im Kontext beinhalten. So stellt eine Kulturen-unabhängig bekannte Zeigegeste des Menschen das Zeigen mit einem Finger dar - sie wird als eine der ersten Gesten überhaupt schon von Kindern erlernt. Bei Erwachsenen wird diese Zeigegeste häufig als ein figuratives, symbolisches Zeigen sogar auf nicht vorhandene Gegenstände, Orte oder Ideen genutzt. Das bedeutet konkret, dass eine Zeigegeste eine bestimmte Position und/oder ein bestimmtes Ziel bedeuten soll. Anstelle der Hand oder des Fingers können auch andere Körperteile oder ebenso Gegenstände, die in der Hand gehalten werden, für eine Zeigegeste eingesetzt werden.

Alle diese Zeigegesten werden intuitiv angewendet und weisen den in der vorliegenden Erfindung genutzten Vorteil auf, dass sie insofern keine besondere Konzentration des Anwenders in Anspruch nehmen.

Des weiteren beinhalten Zeigegesten einen, insbesondere auf gezeigte Raumpositionen bezogenen, interessanten Kontextinformationsgehalt. Gerade dieser Kontextinformationsgehalt wird in der vorliegenden Erfindung nutzbringend zum Zwecke der Ansteuerung von Funktionen eines oder mehrerer Anwendungssysteme im Kontext einer gewünschten Raumposition sensorisch erfasst, erkannt sowie automatisch einer Bedeutung zugeordnet.

Dabei generiert die vorliegende Erfindung einen relevanten Anwendernutzen hinsichtlich einer deutlich verringerten Ablenkung der Konzentration beim Führen des Fortbewegungsmittels, woraus sich eine höhere Verkehrssicherheit ergibt. Denn die vorliegende Erfindung schöpft vorteilbringend das enorme Vereinfachungspotential von Zeigegesten und von intuitiv-deiktischem menschlichen Bewegungsverhalten zur Bestimmung von Raumpositionen aus, an welchen eine spezifische Funktion eines Anwendungssystems des Fortbewegungsmittels aktiviert, ausgeführt und/oder optimiert werden soll.

Dabei gelingt es der vorliegenden Erfindung, durch das Einbinden von berührungslos erkannten Zeigegesten bei der berührungslosen Bedienung eines oder mehrerer Anwendungssysteme herkömmlich mehrere separate Einzelschritte eines Bedienmenüs in geschickter Weise zusammenzufassen, wodurch die Bedienung durch den Anwender vereinfacht sowie unterstützt wird und anwenderfreundlicher sowie zielführender gestaltet ist.

Auf diese Weise gelingt es durch die vorliegende Erfindung, beispielsweise eine intuitive Optimierung von akustischen Einstellungen und Feinjustierungen auf individuelle Insassenbedürfnisse hin mit einer einfachen, zügigen und im freien Raum, also ohne Suche eines Bedienpultes, Schalters, etc., ausführbaren Handbewegung dem Führer eines Fortbewegungsmittels zu ermöglichen.

Die Unteransprüche betreffen bevorzugte Weiterbildungen der Erfindung.

Vorzugsweise wird dabei die Raumposition als eine Sitzposition und/oder eine Gangposition innerhalb des Fortbewegungsmittels erkannt wird. Dabei wird unter Gangposition im Rahmen der Erfindung eine Raumposition verstanden, in welchem gerade kein Insasse Platz nimmt, beispielsweise ein Mittelgang in einem Flugzeug.

In einer bevorzugten Weiterentwicklung des Verfahrens sind die automatische Analyse und Erkennung mittels eines weiteren Schrittes noch optimiert, indem zusätzlich ein sensorisches Erkennen eines Vorhandenseins und/oder einer Körperteilposition, insbesondere einer Kopfposition, zumindest eines Insassen, insbesondere des Anwenders, durchgeführt wird. So kann automatisch unterschieden werden, ob es sich bei einem Insassen beispielsweise um einen großen Mann, eine kleine Frau, ein Kind oder ein in einer Sitzschale liegendes Baby handelt. Auch kann beispielsweise bei einem oder mehreren stets selben Insassen eine geänderte Rückenlehnen- und/oder Sitzhöhenposition eine entsprechend geänderte Raumsituation von Körperteilen, insbesondere des Kopfes, automatisch berücksichtigt werden.

Vorzugsweise wird die Funktion bezüglich der Raumposition und/oder der Körperteilposition eines Insassen, insbesondere des Anwenders, optimiert. Beispielsweise kann eine erkannte Kopfposition eines Insassen für die automatische Feinoptimierung eines Audio-Systems oder die Ausrichtung von Rück- und/oder Seitenspiegeln sorgen, nachdem die Funktion als solche in Abhängigkeit der durch die Zeigegeste adressierten Raumposition, insbesondere in einer Designation auf einen spezifischen Sitzplatz hin, angesteuert ist. Und/oder es wird eine automatisch erkannte Fußposition genutzt für eine räumlich noch weiter präzisierte automatische Ausrichtung von Lenklamellen eines Luftauslasses im Zuge der erfolgenden Ansteuerung der Funktion einer Klimaanlage als Anwendungssystem in Richtung auf eine durch die Zeigegeste adressierte Raumposition. Insbesondere eine zusätzlich erkannte Information über das Vorhandensein eines Kindes kann das Ansteuern von Funktionen diverser Anwendungssysteme deutlich optimieren, beispielsweise im Falle einer Sitzplatz-bezogenen Türverriegelung und oder eines abzuschaltenden Air-Bags.

Besonders bevorzugt ist die durch die Zeigegeste adressierte Raumposition nach vordefinierten 2D- oder 3D-Raumsegmenten, insbesondere nach Sitzpositionen segmentiert. Insbesondere in einer als x-Richtung bezeichneten geradeaus Bewegungsrichtung bzw. Längsachse des Fortbewegungsmittels wird zumindest eine vordere Zone und eine hintere Zone unterschieden, insbesondere im Falle eines Kraftfahrzeuges mit vier oder fünf Plätzen. Hingegen im Falle eines längeren Fortbewegungsmittels, wie beispielsweise einem Transporter, Bus, Boot oder Flugzeuges, erweist sich eine Unterteilung in Form einer durchnummerierten Zonenfolge von Sitzreihen als sinnvoll. Alternativ oder zusätzlich kann in einer als y-Richtung bezeichneten horizontalen Querrichtung eine linke Zone, eine mittlere Zone und eine rechte Zone und/oder in eine Folge von Sitzspalten (beispielsweise in "Backbordfenstersitze", "Backbordgang", "Mittelsitze", "Steuerbordgang", "Steuerbordfenstersitze") unterschieden werden. Besonders sinnvoll erweist sich eine Segmentierung in zu unterscheidende Zonen, welche sich an möglichen Raumpositionen von Insassen orientiert bzw. gerade auch Insassen-freie Zonen wie Mittelkonsolen und freie Mittelgänge ausklammert. Ferner kann in einer, häufig auch als Höhenachse definierten, im Rahmen der Erfindung als z-Richtung bezeichneten vertikalen Richtung zumindest in eine Kopfzone und in eine Fußzone, optional in eine weitere Rumpfzone, segmentiert werden.

Die vorliegende Erfindung kann im Sinne einer Technologieplattform oder neuartigen technischen Funktionalität im Bereich der Gestikerkennung für ganz unterschiedliche Anwendungssysteme des Fortbewegungsmittels ihren Einsatz finden:
Intendierte Anwendungssysteme umfassen dabei vorzugsweise von den Insassen erlebbare, den Innenraum des Fortbewegungsmittel betreffende, wie insbesondere ein Audio- und/oder Entertainment-System; und/oder ein Beleuchtungssystem; und/oder eine Klimaanlage und/oder eine Heizung und/oder ein Schiebedach; und/oder einen elektrischen Fensterheber; und/oder ein Komfort-System, beispielsweise eine Massageeinrichtung; und/oder eine Sitzverstellung; und/oder ein Navigationssystem; und/oder einen Bordcomputer und/oder Informationssystem.

Alternativ oder zusätzlich sind Sitzplatz-abhängige Funktionen von bekannten Anwendungssystemen bevorzugt. Wird beispielsweise das Vorhandensein eines Kindes, insbesondere bei erkanntem Vorhandensein einer Babyschale und/oder eines Kindersicherheitssitzes, als Information zu der durch die Zeigegeste adressierten Raumposition kombiniert, erfolgt nur dort eine automatische Airbag-Abschaltung und/oder Tür- und/oder Sicherheitsgurtverriegelung. Bei einer weiteren Ausführungsform, in welcher die Information über das Vorhandenseins eines Fahrer eines Sicherheitsdienstes und/oder eines fluchtgefährdeten weiteren Insassen mit einbezogen wird, wird lediglich für den durch die Zeigegeste des Anwenders bedeuteten Sitzplatz oder eine Rückbank eine Warnanlage und/oder eine Stauraumverriegelung berührungslos betätigt. Weitere Anwendungssysteme umfassen solche, welche mit der Fahrdynamik des Fortbewegungsmittels zusammenhängen, vorzugsweise eine Einzelrad- und/oder Fahrwerk- und/oder Achsen-Ansteuerungseinheit. So wird im Rahmen der Erfindung eine nahezu instantane Abschaltung eines Fahrdynamikregelungssystems, beispielsweise eines Elektronischen Stabilitäts-Programms und/oder Antiblockiersystems, selbst während des Führens des Fortbewegungsmittels durch eine spontane, schnell ausgeführte Zeigegeste unterstützt; beispielsweise wenn der Fahrer ein Schleudern auf einer Fahrbahn mit uneinheitlichen Traktionseigenschaften, insbesondere durch Matsch, Regengüsse und/oder Glatteis, verspürt. Insofern sind im Rahmen der Erfindung jedenfalls auch Verfahren mit Echtzeit-Erkennung der Zeigegeste und Echtzeit-Ansteuerung der vom Anwender intendierten Funktion enthalten.

Es sind des Weiteren auch Anwendungssysteme inbegriffen, welche Differentiale und/oder Verteilergetriebe und/oder ein Fahrassistenzsystem und/oder ein Parkassistenzsystem und/oder eine Bewegungssteuerungseinrichtung, insbesondere ein Höhen- und/oder Seitenruder eines Flugzeugs und/oder eines Bootes, betreffen.

Dabei die vorliegende Erfindung bevorzugt ausgestaltet, etwaige Missinterpretationen des Anwenderwunsches zuverlässig zu vermeiden. Hierzu werden bei dem Verfahren vorzugsweise zunächst die folgenden weiteren Schritte ausgeführt, und zwar ein sensorisches Erkennen eines vom Anwender erzeugten Aktivierungssignals, vorzugsweise eines akustischen, insbesondere sprachlichen, Aktivierungssignals, durch eine Signalerkennungseinheit, sowie nachfolgend ein automatisches Zuordnen des Aktivierungssignals zu einer vordefinierten, durch eine Ordnungsstruktur mit Ober- und Unterfunktionen gekennzeichneten Funktionskatalogauswahl des zumindest einen Anwendungssystems.

Bevorzugt kann ein vordefiniertes Aktivierungssignal, beispielsweise eine Anmeldegeste oder ein Sprachkommando, des Anwenders zum Starten des erfindungsgemäßen Verfahrens zur Ansteuerung einer Funktion erfasst und automatisch erkannt werden. Das Aktivierungssignal kann als Kontaktaufnahme des Anwenders zum Fortbewegungsmittel bezüglich der Ansteuerung der Anwendungssysteme des Fortbewegungsmittels verstanden werden. Erst im Ansprechen auf das ermittelte Aktivierungssignal wird die oben genannte Zeigegeste zum Definieren der Raumposition analysiert. Mit anderen Worten kann eine automatische Analyse und Erkennung der Zeigegesten bis zum erfolgreichen Erfassen und Erkennen des Aktivierungssignals unterbleiben, wodurch Rechenressourcen geschont werden. Überdies wird vermieden, dass eine versehentliche Geste als identische Zeigegeste interpretiert würde und Funktionen unerwünscht angesteuert würden. Dies dient insbesondere einem unabgelenkten Führen des erfindungsgemäß ausgestalteten Fortbewegungsmittels.

Weiter bevorzugt ist im Verfahren die Ausführung zunächst eines noch weiteren Schrittes vorgesehen, und zwar ein individuelles Konfigurieren der vordefinierten Funktionskatalogauswahl durch mindestens einen Anwender. Das individuelle Konfigurieren gestaltet sich als Zuordnen zumindest einer Ober- oder Unterfunktion aus der Funktionskatalogauswahl auf eine individuelle Zeigegeste des Anwenders mit anschließendem Abspeichern, insbesondere mit zumindest temporärer Wirksamkeit.

Um für den Anwender möglichst komfortable und natürliche Zeigegesten zur erfindungsgemäßen Ansteuerung einer Funktion eines Anwendungssystems zu ermöglichen, kann eine vom Anwender ausgeführte Zeigegeste in einem Lernmodus erfasst und anschließend durch den Anwender einer Raumposition, welche im Ansprechen auf die Geste adressiert sein soll, vorzugsweise im Zusammenhang mit einer spezifischen Funktion, zugeordnet werden. Beispielsweise können nach Art einer konfigurierbaren Tastaturbelegung, wie sie im EDV-Bereich üblich ist, vordefinierte Raumpositionen mit einem jeweiligen Gestikmuster des Anwenders belegt werden, wobei Arm-, Hand- und Fingerstellungen und -bewegungen sowie Kombinationen aus den vorgenannten Bewegungen die jeweilige Raumposition und/oder die von der Raumposition abhängige befohlene Funktion eines und/oder mehrerer Anwendungssysteme kennzeichnen können. Ebenfalls kann lediglich ein Aktivierungssignal, beispielsweise eine "Triggergeste" und/oder ein verbal und/oder als Schnalzen ausgeführtes Startkommando, zum Starten des erfindungsgemäßen Verfahrens erlernt und abgespeichert werden.

Es ist bevorzugt auch möglich, dass zwischen einzelnen Schritten eine Zeitverzögerung definiert ist bzw. dass gegebenenfalls im Bedienfall auch die Möglichkeit zu einem gewünschten Abbruch eines bereits gestarteten Verfahrensablaufs besteht. Weiter bevorzugt ist von dem Verfahren zumindest zwischen einem auszuführenden Schritt und einem nächsten auszuführenden Schritt ein weiterer zeitverzögernder Schritt umfasst. Dabei wird ein Timer mit einer vordefinierten Zeitdauer gestartet. Sodann wird im Ansprechen auf ein Ablaufen des Timers der nächste auszuführende Schritt unverzüglich ausgeführt. Bevorzugte Verzögerungszeiten liegen hierbei zwischen 0,5 bis 20 Sekunden.

Bei den weiteren Erfindungsaspekten entsprechen die Merkmale, Merkmalskombinationen und die sich aus diesen ergebenden Vorteile den in Verbindung mit dem erstgenannten Erfindungsaspekt des erfindungsgemäßen Verfahrens beschriebenen derart ersichtlich, dass zur Vermeidung von Wiederholungen auf die obigen Ausführungen verwiesen wird.

Gemäß einem zweitgenannten Aspekt der vorliegenden Erfindung wird eine Vorrichtung, insbesondere eine Anwenderschnittstelle, eines Anwendungssystems eines Fortbewegungsmittels vorgeschlagen, welche eingerichtet ist, das erfindungsgemäße Verfahren auszuführen.

Eine erfindungsgemäße Vorrichtung bzw. eine Anwenderschnittstelle zur Ansteuerung einer Funktion eines Anwendungssystems eines Fortbewegungsmittels, insbesondere eines Kraftfahrzeugs, umfasst zumindest einen Sensor, eine Auswerteeinheit und eine Steuereinheit.

Dabei ist der Sensor eingerichtet, eine dreidimensional im Raum von einem Anwender ausgeführte Zeigegeste zu erfassen.

Es ist dabei vorzugsweise vorgesehen, dass der Sensor eine optische Erfassungseinheit, insbesondere ein Kamerasystem; und/oder eine Erfassungseinheit auf Basis anderer Wellen, vorzugsweise Funk, und/oder Ultraschall, und/oder Wärmestrahlung; und/oder einen kapazitiven Sensor umfasst.

Die Auswerteeinheit wiederum ist eingerichtet, zum einen die erfasste Zeigegeste zu erkennen und zum anderen die durch die Zeigegeste adressierte Raumposition an dem und/oder innerhalb des Fortbewegungsmittels automatisch zuzuordnen. Dabei kann die Auswerteeinheit beispielsweise als programmierbarer Prozessor mit einem Speichermittel ausgestaltet sein. Ferner erhält die Auswerteeinheit, was die Ausführung der vorliegenden Erfindung betrifft, über jeweilige Signaleingänge Input von dem Sensor und gegebenenfalls zusätzlich von der Signalerkennungseinheit.

In einer möglichen Ausführungsform ist der Sensor als intelligenter Sensor ausgeführt, indem er bereits eine eigene Sensorauswerteeinheit umfasst, welche zumindest teilweise der Erkennung der Zeigegeste dient.

Mittels der Speichermittel kann die Auswerteeinheit eine vordefinierte Funktionskatalogauswahl von einem oder auch mehreren Anwendungssystemen vorhalten. Dabei ist die Funktionskatalogauswahl durch eine Ordnungsstruktur mit Ober- und Unterfunktionen gekennzeichnet. Nach erfolgtem automatischen Zuordnen wird über einen, vorzugsweise designierten, Signalausgang der Auswerteeinheit eine Steuereinheit angewiesen.

Die Steuereinheit ist eingerichtet, im Ansprechen darauf die Funktion auf einer Funktionsvorrichtungseinheit Abhängigkeit von der adressierten Raumposition anzusteuern oder zu regeln.

Bevorzugt umfasst die Funktionsvorrichtungseinheit eine Signalerzeugungseinheit, beispielsweise einen Lautsprecher, und/oder ein Spotlicht und/oder einen Ventilator.

Insbesondere kann eine Sitzposition als die für die Ausführung einer Funktion eines Anwendungssystems durch die Zeigegeste ausgewählt beziehungsweise angezeigt werden. Die Zeigegeste kann innerhalb und/oder außerhalb des Fortbewegungsmittels ausgeführt werden.

Gemäß einem drittgenannten Erfindungsaspekt wird ein Fortbewegungsmittel, beispielsweise ein Pkw, ein Transporter, ein Lkw, ein Nutzfahrzeug, ein Luft- und/oder Wasserfahrzeug, vorgeschlagen, welches eine Vorrichtung bzw. Anwenderschnittstelle gemäß dem zweitgenannten Erfindungsaspekt aufweist, sodass auch bezüglich der Merkmale, Merkmalskombinationen und Vorteile des Fortbewegungsmittels auf die obigen Ausführungen verwiesen werden kann. Dabei kann die Vorrichtung bzw. Anwenderschnittstelle insbesondere für den Führer des Fortbewegungsmittels vorgesehen sein, mittels welcher der Führer während des Führens des Fortbewegungsmittels auf konveniente, nicht ablenkende Weise mittels Zeigegestik zuverlässig und fehlerminimiert kommunizieren kann.

Weitere Einzelheiten, Merkmale und Vorteile der Erfindung ergeben sich aus der nachfolgenden Beschreibung und den Figuren. Es zeigen:
- Figur 1: eine schematische Darstellung einer Situation als Seitenansicht, in welcher ein Ausführungsbeispiel des erfindungsgemäßen Verfahrens in Verbindung mit einem ersten Ausführungsbeispiel einer erfindungsgemäßen Vorrichtung, welche in einem Ausführungsbeispiel eines erfindungsgemäßen Fortbewegungsmittels verbaut ist, und mit einer ersten Zeigegeste, welche ausgeführt wird;
- Figur 2: eine Detailansicht der Vorrichtung aus Figur 1;
- Figur 3: ein Flussdiagramm veranschaulichend Schritte eines Ausführungsbeispiels eines erfindungsgemäßen Verfahrens;
- Figur 4: eine Prinzipskizze als Aufsicht veranschaulichend das erfindungsgemäße Verfahren in Verbindung mit einem zweiten Ausführungsbeispiel einer erfindungsgemäßen Vorrichtung und mit einer zweiten Zeigegeste;
- Figur 5: eine Prinzipskizze als Aufsicht veranschaulichend das Verfahren in Verbindung mit dem zweiten Ausführungsbeispiel der Vorrichtung und mit einer dritten Zeigegeste;
- Figur 6: eine Prinzipskizze als Rückansicht veranschaulichend das Verfahren in Verbindung mit einem dritten Ausführungsbeispiel der Vorrichtung und mit einer vierten Zeigegeste; und
- Figur 7: eine Prinzipskizze als Aufsicht veranschaulichend das Verfahren in Verbindung mit dem zweiten Ausführungsbeispiel der Vorrichtung und mit einer fünften Zeigegeste.

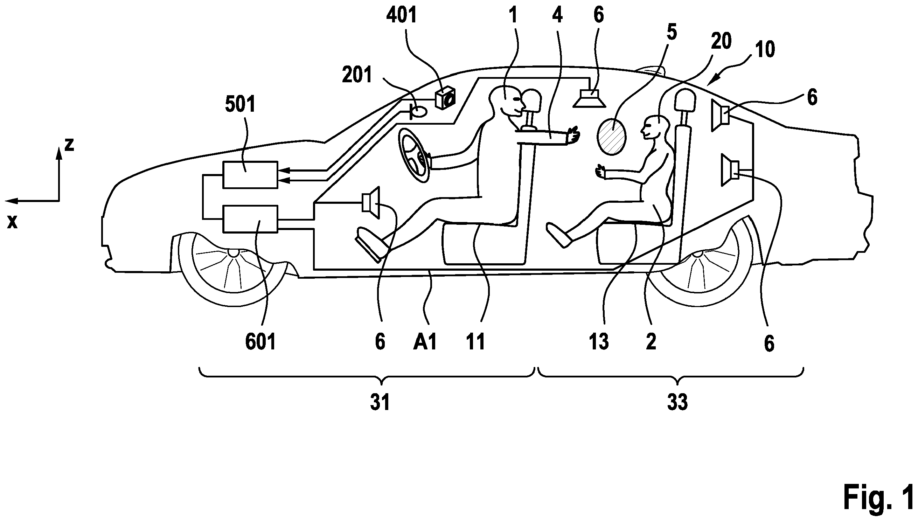

Figur 1 zeigt einen Pkw als Ausführungsbeispiel eines erfindungsgemäßen Fortbewegungsmittels10, welches von einem Fahrer, einem Anwender 1, in Bewegungsrichtung x gefahren wird. Der Anwender 1 sitzt in einer vorderen Zone 31 des Pkws 10, nämlich auf dem Fahrersitz als erster Sitzposition 11. Als weiterer Insasse 2 sitzt ein Kind auf der eine hintere Zone 33 definierenden Rückbank des Pkws 10, und zwar auf einer dritten Sitzposition 13.

Dargestellt ist eine Situation während der Fahrt, in welcher der Anwender 1 des Pkws 10 im Erfassungsbereich eines als Frontkamera ausgeführten, optisch erfassenden, Sensors 401, mit seiner Hand eine dynamische Zeigegeste 4 nach hinten zu seinem Kind 2 dreidimensional im Raum ausführt. Damit bedeutet er um sein Kind 2 eine Raumposition 5 in der hinteren Zone 33, insbesondere über beziehungsweise auf der dritten Sitzposition 13.

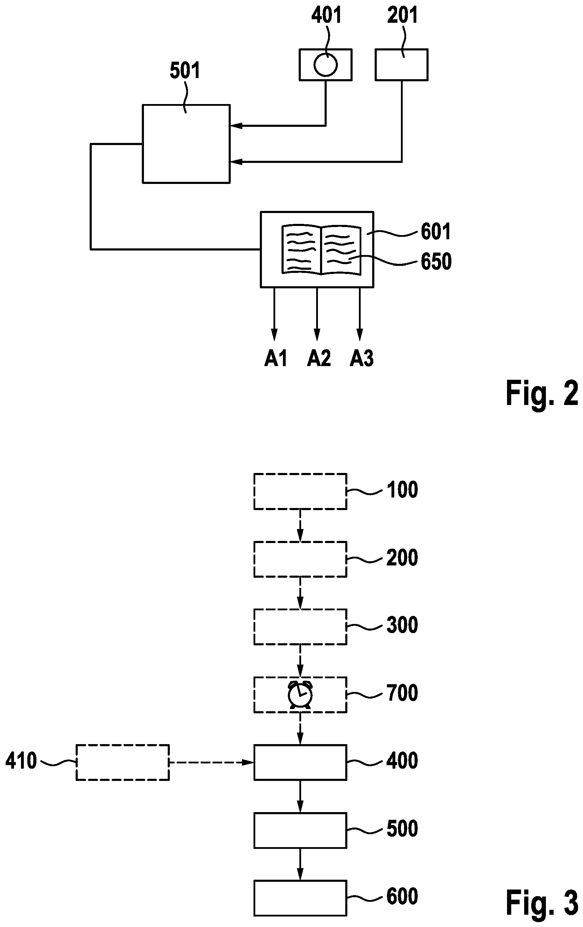

Wie anhand der Figur 1 und der Figur 2 als Detailausschnitt der Figur 1 veranschaulicht, werden die Daten aus der Frontkamera 401 mit der erfassten Zeigegeste 4 einem programmierbaren Prozessor als Beispiel einer Auswerteeinheit 501 über einen designierten Signaleingang zugeführt. Dort werden sie automatisch durch den Abgleich mit abgespeicherten Referenzen analysiert, wodurch die Zeigegeste 4 mit der Kontextinformation der durch die Zeigegeste 4 bedeuteten Raumposition 5 erkannt werden.

Diese Information wird nun an eine elektronische Steuereinheit 601 weitergegeben. In diesem Ausführungsbeispiel liegt in der elektronischen Steuereinheit 601 eine Funktionskatalogauswahl 650 für diverse Anwendungssysteme A1-A3 des Pkws 10 abgespeichert, und zwar für ein Audiosystem A1, ein Beleuchtungssystem A2 und eine Klimaanlage A3.

Mittels einer als Spracherkennungsmikrophon ausgeführten Signalerkennungseinheit 201 ist zuvor ein von dem Anwender 1 erzeugtes Aktivierungssignal sensorisch erkannt worden, so dass das Audiosystem A1 als zu dem Zeitpunkt intendiertes Anwendungssystem vorausgewählt ist.

Die Steuereinheit 601 veranlasst in Folge über ihren Signalausgang das Audiosystem A1 des Pkws 10, eine Lautstärkenerhöhung hin auf das Kind 2 in der dritten Sitzposition 13 vorzunehmen. Gleichzeitig möchte der Fahrer 1 für sich mehr Ruhe. Dies entspricht der gleichzeitigen Ausführung eines Fader-Befehls hin auf die in der hinteren Zone 33 befindlichen, als Lautsprecher ausgeführten, Funktionsvorrichtungseinheiten 6 überlagert mit einem Balance-Befehl hin auf die, in der linken Zone 41 befindlichen, Lautsprecher 6.

Zur weiteren Klangoptimierung fließt in dieser Ausführungsform noch zusätzlich die Kontextinformation über die Kopfposition als hier interessierende Körperteilposition 20 des Kindes ein, welche gleichfalls vom als Kamera ausgeführten Sensor 401 mitverzeichnet und erkannt wird. Auf diese Weise ist eine ideale räumliche Feinabstimmung und Ausrichtung der Lautsprecher auf die Ohren des Kindes 2 automatisch optimiert.

Figur 3 zeigt Schritte eines Ausführungsbeispiels eines erfindungsgemäßen Verfahrens zur Ansteuerung einer Funktion eines Anwendungssystems A1-A3 eines Fortbewegungsmittels 10. Dabei stellen die Schritte 400, 500, 600 den erfindungsgemäßen Kern des Verfahrens dar, während die weiteren Schritte 100, 200, 300, 410, 700 optionale Ergänzungen im Ablauf des Verfahrens darstellen, was in diesem Schema durch gestrichelte Linien der Einkastungen und Pfeile angedeutet ist. Es sei an dieser Stelle darauf hingewiesen, dass insbesondere der mittels eines Timers verzögernde, hier beispielhaft zwischen Schritt 300 und Schritt 500 eingetragene, Schritt 700 auch an anderen sowie an mehreren Positionen zwischengeschaltet sein kann und selbstverständlich auch mit untereinander unterschiedlichen Verzögerungszeiten.

In Schritt 400 des sensorischen Zeigegeste-Erkennens wird eine dreidimensional vom Anwender 1 im Raum ausgeführte Zeigegeste 4 mittels eines Sensors 401 erfasst und erkannt. In einer weiterentwickelten Ausführungsform findet zusätzlich ein verfeinernder Schritt 410 des sensorischen Körperteilposition-Erkennens statt, welcher detektiert, welche Insassen 2 vorhanden sind und welche für diese größenabhängig spezifischen Körperteilpositionen 20, insbesondere Kopfpositionen, mitzubeachten sind. Auf Schritt 400 folgt ein automatisches Zuordnen 500 der durch die Zeigegeste 4 adressierten Raumposition 5 an dem und/oder innerhalb des Fortbewegungsmittels 10. Im Ansprechen darauf erfolgt ein Ansteuern 600 der Funktion in Abhängigkeit von der adressierten Raumposition 5. Es wird also im Ergebnis durch den Zusammenhang der Schritte 400-600 eine gewünschte Funktion auf einer Funktionsvorrichtungseinheit 6 in Abhängigkeit von der durch die Zeigegeste 4 adressierten Raumposition 5 angesteuert und/oder geregelt.

Vorab besteht die Option des Schritts 100 des individuellen Konfigurierens der gewünschten Funktionen aus der vordefinierten Funktionskatalogauswahl 650 durch den Anwender 1, beispielsweise nach dem Fahrzeugkauf. Dabei ordnet der Anwender 1 zumindest ein Ober- oder Unterfunktion aus der Funktionskatalogauswahl auf eine individuelle Zeigegeste von ihm zu. Dazu wird diese erlernte Information anschließend, insbesondere mit zumindest temporärer Wirksamkeit, abgespeichert. Mit diesem Schritt kann in der automatischen Bedienung der Anwenderschnittstelle auf individuelle Vorlieben für Funktionen, Anwendungssysteme und/oder auf individuelle Merkmale der Zeigegesten 4 des Anwenders 1 abgestellt und voroptimiert werden.

Im gleichfalls fakultativen Ablauf der ein optionales Aktivierungssignal, beispielsweise ein Sprachkommando, des Anwenders 1 betreffenden Schritte 200 und 300 wird ein solches Aktivierungssignal zunächst in Schritt 200 durch eine Signalerkennungseinheit 201 sensorisch erkannt, sodann in Schritt 300 automatisch der Funktionskatalogauswahl 650 zugeordnet. Mit diesen Schritten 200 und 300 zeigt der Anwender 1 dem Fortbewegungsmittel 10 den Wunsch an, das erfindungsgemäße Verfahren auf einer vorausgewählten Funktionskatalogauswahl 650 des zumindest einen Anwendungssystems zu initiieren.

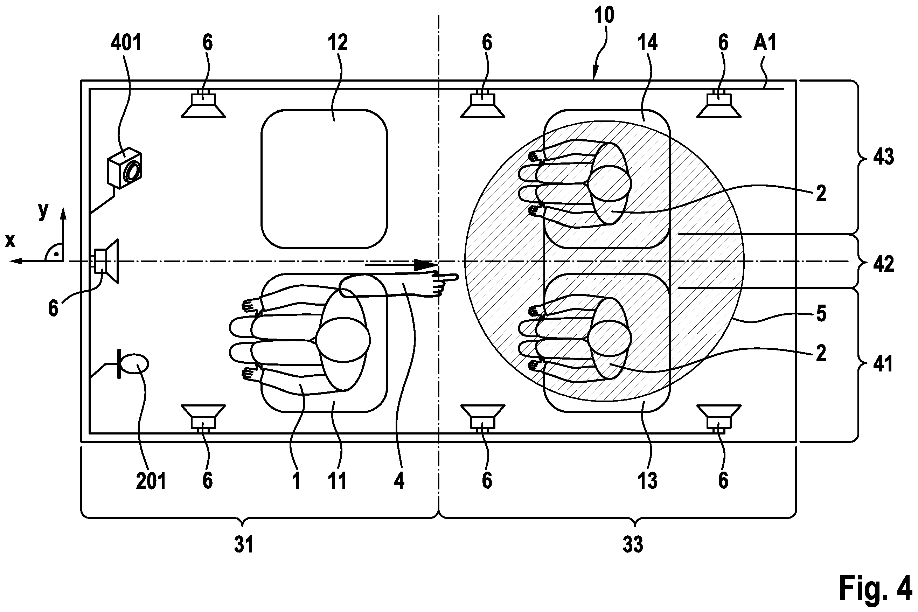

Die Figuren 4-7 zeigen für einen wie in Figur 1 in Bewegungsrichtung x gefahrenen Pkw10 vier weitere Varianten von Zeigegesten des erfindungsgemäßen Verfahrens in zwei weiteren Ausführungsbeispielen einer erfindungsgemäßen Vorrichtung zur Ansteuerung eines Audiosystems A1 mit mehreren an unterschiedlichen Stellen im Innenraum verteilten Lautsprechern 6.

Ähnlich wie bereits in Figur 1 dargestellt, wird in Figur 4 eine nahezu gleiche Ausführungsform nun aus der Vogelperspektive veranschaulicht. Hier führt der Anwender 1 mittels einer dynamischen Handbewegung nach hinten in den Fondbereich des Pkws 10 als einer zweiten Zeigegeste einen Fader-Befehl auf die beiden in der hinteren Zone 33 befindlichen Insassen 2 aus. Hier wird also durch den Anwender 1 eine entlang der, quer zur Bewegungsrichtung X orientierten, horizontalen Querrichtung Y gleichmäßige Ansteuerung der vier Lautsprecher 6 nahe der durch die Zeigegeste 4 zugeordneten Raumposition 5 verdeutlicht.

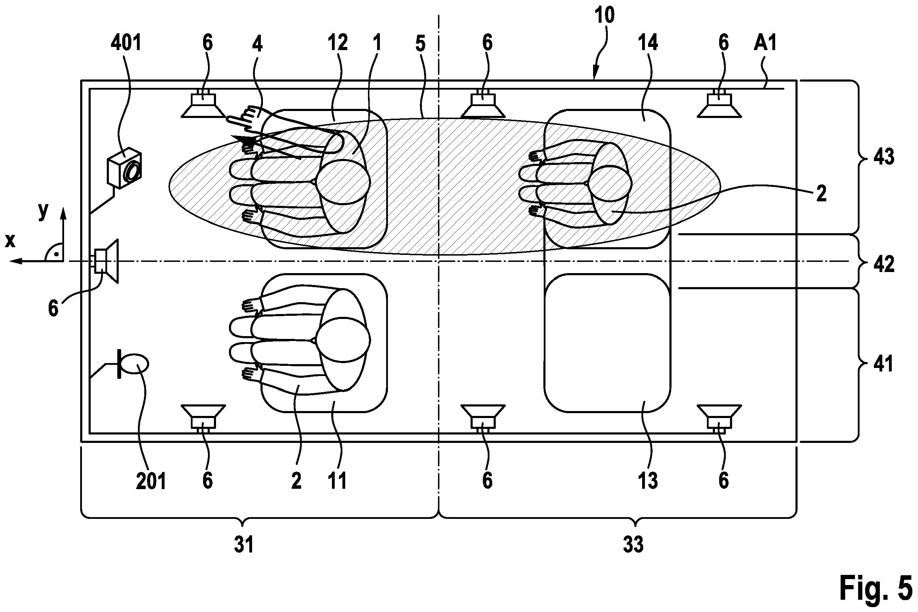

Figur 5 zeigt eine weitere Variante mit einer dritten Zeigegeste, in welcher nicht der Fahrer selber, sondern ein auf Sitzposition 12 befindlicher Beifahrer als Anwender 1 das erfindungsgemäße Verfahren ausführt. So wird hier vom Beifahrer 1 die Sound-Balance des Audiosystems A1 durch eine mit Bewegung nach rechts ausgeführte Zeigegeste 4 in der rechten Zone 43 des Pkws 10 bedeutete Raumposition 5 verschoben.

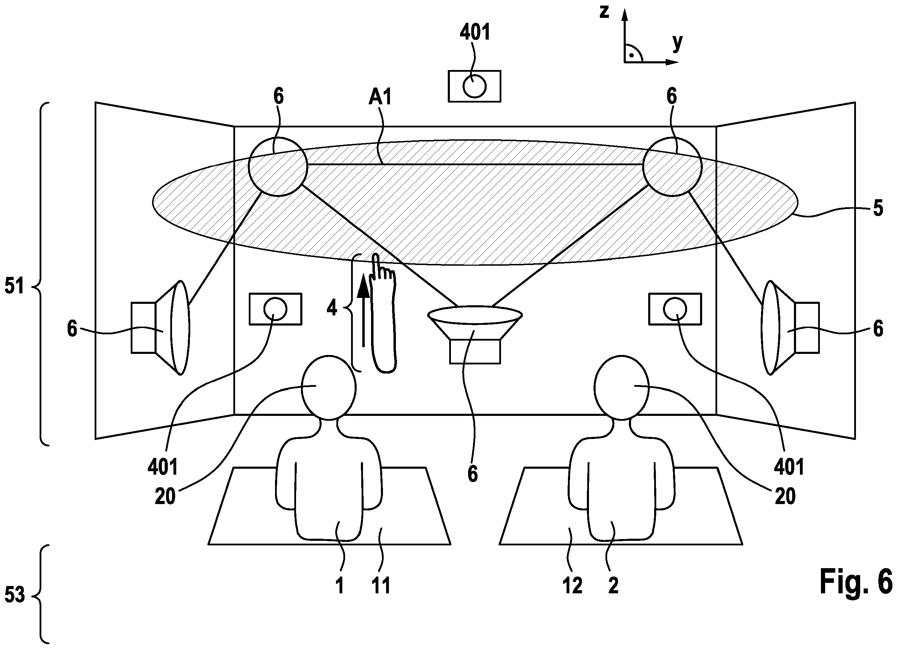

Figur 6 stellt eine noch weitere Variante mit einer vierten Zeigegeste dar, worin eine Verschiebung der Lautstärke zu den 3D-Höhenlautsprechern durch eine Zeigegeste 4 des auf Sitzplatz 11 befindlichen Anwenders 1 veranschaulicht wird. In dieser Ansicht aus dem Fond des Pkws 10 in die vordere Zone 31 sind zwei Insassen 1,2 auf den Sitzpositionen 11, 12 zu erkennen, deren Kopfpositionen 20 von drei Sensoren 401 erkannt werden. Um die innerhalb der in vertikaler Querrichtung z befindlichen oberen Zone 51 Lautsprecher 6 gezielt anzusteuern und um die in einer unteren Zone 53 angeordneten reduziert und/oder gar nicht mehr anzusteuern, führt der Anwender 1 in diesem Beispiel eine darauf gerichtete Zeigegeste 4 aus, indem er seinen rechten Arm auf eine in der oberen Zone 51 befindliche Raumposition 5 nach oben schwenkt.

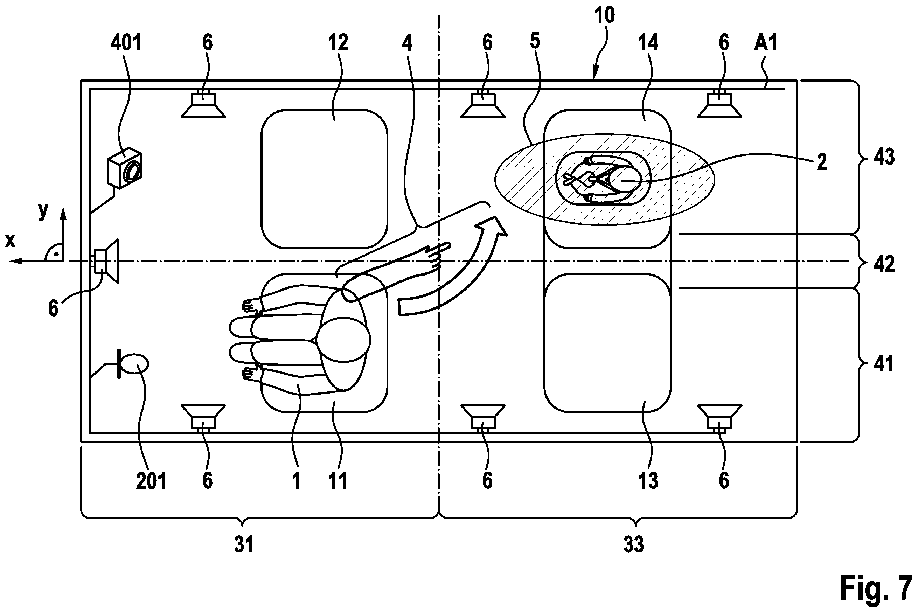

Figur 7 stellt in einer noch weiteren Abwandlung eine in alle drei Raumrichtungen x, y, z überlagert ausgeführte und die Raumposition 5 bedeutende Zeigegeste 4 als fünfter Variante einer Zeigegeste dar, und zwar in Richtung eines, aus Sicht des Fahrers 1, hinten-rechts-unten in Sitzposition 14 liegenden Babies.

### Bezugszeichenliste:

- 1: Anwender
- 2: Insasse
- 4: Zeigegeste
- 5: Raumposition
- 6: Funktionsvorrichtungseinheit insb. Signalerzeugungseinheit wie Lautsprecher
- 10: Fortbewegungsmittel
- 11: Erste Sitzposition
- 12: Zweite Sitzposition
- 13: Dritte Sitzposition
- 14: Vierte Sitzposition
- 20: Körperteilposition
- 31: vordere Zone
- 33: hintere Zone
- 41: linke Zone
- 42: mittlere Zone
- 43: rechte Zone
- 51: Kopfzone
- 53: Fußzone
- 201: Signalerkennungseinheit wie ein Spracherkennungsmikrophon
- 401: Sensor insb. optische Erfassungseinheit wie Kamera
- 501: Auswerteeinheit insb. ein programmierbarer Prozessor
- 601: Steuereinheit
- 650: Funktionskatalogauswahl
- 100-700: Verfahrensschritte

- A1-A3: Anwendungssystem
- x: Bewegungsrichtung
- y: horizontale Querrichtung
- z: vertikale Querrichtung

## Patentansprüche

1. Verfahren zur Ansteuerung einer Funktion eines Anwendungssystems (A1, A2, A3) eines Fortbewegungsmittels (10) umfassend die Schritte:
- sensorisches Erkennen (200) eines vom Anwender erzeugten Aktivierungssignals durch eine Signalerkennungseinheit (201),
- sensorisches Erkennen (400) einer dreidimensional im Raum von einem Anwender (1) ausgeführten und mittels eines Sensors (401) erfassten Zeigegeste (4),
- automatisches Zuordnen (500) einer durch die Zeigegeste (4) adressierten Raumposition (5) an dem und/oder innerhalb des Fortbewegungsmittels (10), wobei die durch die Zeigegeste (4) adressierte Raumposition (5) nach vordefinierten 2D- oder 3D-Raumsegmenten (11-14, 31, 33, 41-43, 51, 53) in Form von Sitzpositionen (11-14) segmentiert ist und als Sitzposition (11-14) erkannt wird, und im Ansprechen darauf
- Ansteuern (600) der Funktion in Form einer Optimierung akustischer Einstellungen, nämlich Balance und/oder Fader in Abhängigkeit von der adressierten Raumposition (5), wobei das Anwendungssystem (A1, A2, A3) des Fortbewegungsmittels (10)
- ein Audio- und/oder Entertainment-System (A1) umfasst.

2. Verfahren nach Anspruch 1, weiter umfassend:
- sensorisches Erkennen (410) eines Vorhandenseins und/oder einer Körperteilposition (20), insbesondere einer Kopfposition, zumindest eines Insassen (2), insbesondere des Anwenders (1).

3. Verfahren nach Anspruch 2, wobei die Funktion bezüglich der Raumposition (5) und/oder der Körperteilposition (20) eines Insassen (2), insbesondere des Anwenders (1), optimiert wird.

4. Verfahren nach einem der vorstehenden Ansprüche, wobei die durch die Zeigegeste (4) adressierte Raumposition (5) nach vordefinierten 2D- oder 3D-Raumsegmenten (11-14, 31, 33, 41-43, 51, 53), segmentiert ist, und zwar
- in einer vertikalen Querrichtung (z): zumindest in eine Kopfzone (51) und in eine Fußzone (53).

5. Verfahren nach einem der vorstehenden Ansprüche, wobei zunächst der folgende weitere Schritt ausgeführt wird:
- automatisches Zuordnen (300) des Aktivierungssignals zu einer vordefinierten, durch eine Ordnungsstruktur mit Ober- und Unterfunktionen gekennzeichneten Funktionskatalogauswahl (650) des zumindest einen Anwendungssystems (A1, A2, A3).

6. Verfahren nach Anspruch 5, wobei zunächst der folgende weitere Schritt ausgeführt wird:
- individuelles Konfigurieren (100) der vordefinierten Funktionskatalogauswahl (650) durch mindestens einen Anwender (1) durch Zuordnen zumindest einer Ober- oder Unterfunktion aus der Funktionskatalogauswahl (650) auf eine individuelle Zeigegeste (4) des Anwenders (1) mit anschließendem Abspeichern, insbesondere mit zumindest temporärer Wirksamkeit.

7. Verfahren nach einem der vorstehenden Ansprüche, **dadurch gekennzeichnet, dass** zumindest zwischen einem auszuführenden Schritt (200-500) und einem nächsten auszuführenden Schritt (300-600) ein weiterer zeitverzögernder Schritt (700) umfasst ist, wobei ein Timer mit einer vordefinierten Zeitdauer gestartet, und im Ansprechen auf ein Ablaufen des Timers, insbesondere zwischen 0,5 bis 20 Sekunden, der nächste auszuführende Schritt (400-700) unverzüglich ausgeführt wird.

8. Vorrichtung zur Ansteuerung einer Funktion eines Anwendungssystems (A1, A2, A3) eines Fortbewegungsmittels (10), insbesondere eines Kraftfahrzeugs, umfassend:
- eine Signalerkennungseinheit (201) welche eingerichtet ist, ein vom Anwender erzeugtes Aktivierungssignal zu erkennen,
- einen Sensor (401), welcher eingerichtet ist, eine dreidimensional im Raum von einem Anwender (4) ausgeführte Zeigegeste (3) zu erfassen,
- eine Auswerteeinheit (501), welche eingerichtet ist, die erfasste Zeigegeste (4) zu erkennen und eine durch die Zeigegeste (4) adressierte Raumposition (5) an dem und/oder innerhalb des Fortbewegungsmittels (10) automatisch zuzuordnen, wobei die durch die Zeigegeste (4) adressierte Raumposition (5) nach vordefinierten 2D- oder 3D-Raumsegmenten (11-14, 31, 33, 41-43, 51, 53) in Form von Sitzpositionen (11-14) segmentiert ist und als Sitzposition (11-14) erkannt wird, und
- eine Steuereinheit (601), welche eingerichtet ist, im Ansprechen darauf die Funktion in Form einer Optimierung akustischer Einstellungen, nämlich Balance und/oder Fader in Abhängigkeit von der adressierten Raumposition (5) anzusteuern und/oder zu regeln wobei das Anwendungssystem (A1, A2, A3) des Fortbewegungsmittels (10)
- ein Audio- und/oder Entertainment-System (A1) umfasst

9. Vorrichtung nach Anspruch 8 eines Anwendungssystems (A1, A2, A3) eines Fortbewegungsmittels (10), welche eingerichtet ist, das Verfahren nach einem der Ansprüche 1 bis 7 auszuführen.

10. Vorrichtung nach einem der Ansprüche 8 bis 9 oder Verfahren nach einem der Ansprüche 1 bis 7, wobei der Sensor (401) umfasst
- eine optische Erfassungseinheit, insbesondere ein Kamerasystem; und/oder
- eine Erfassungseinheit auf Basis anderer Wellen, vorzugsweise
- Funk, und/oder
- Ultraschall, und/oder
- Wärmestrahlung; und/oder
- einen kapazitiven Sensor.

11. Fortbewegungsmittel (10) mit einer Vorrichtung nach einem der Ansprüche 8 bis 10.

## Claims

1. Method for controlling a function of an application system (A1, A2, A3) of a means of transportation (10) comprising the following steps:
- sensorily detecting (200) an activation signal generated by the user by a signal detection unit (201),
- sensorily detecting (400) a pointing gesture (4), which is performed three-dimensionally in space by a user (1) and is sensed by means of a sensor (401);
- automatically assigning (500) a spatial position (5) on and/or within the means of transportation (10) that is addressed by the pointing gesture (4), wherein the spatial position (5) addressed by the pointing gesture (4) is segmented on the basis of predefined 2D or 3D spatial segments (11-14, 31, 33, 41-43, 51, 53) in the form of seating positions (11-14) and is detected as a seating position (11-14) and, in response thereto
- controlling (600) the function in the form of an optimization of acoustic settings, specifically balance and/or fader, in accordance with the addressed spatial position (5), wherein the application system (A1, A2, A3) of the means of transportation (10)
- comprises an audio and/or entertainment system (A1).

2. Method according to Claim 1, further comprising:
- sensing (410) a presence and/or a body-part position (20), in particular a head position, at least of an occupant (2), in particular of the user (1).

3. Method according to Claim 2, wherein the function is optimized with respect to the spatial position (5) and/or the body-part position (20) of an occupant (2), in particular of the user (1).

4. Method according to one of the preceding claims, wherein the spatial position (5) addressed by the pointing gesture (4) is segmented on the basis of predefined 2D or 3D spatial segments (11-14, 31, 33, 41-43, 51, 53), specifically
- in a vertical transverse direction (z): at least into a head zone (51) and a foot zone (53).

5. Method according to one of the preceding claims, wherein first the following further step is performed:
- automatically assigning (300) the activation signal to a predefined function catalogue selection (650), **characterized by** superfunctions and subfunctions, of the at least one application system (A1, A2, A3).

6. Method according to Claim 5, wherein first the following further step is performed:
- individually configuring (100) the predefined function catalogue selection (650) by at least one user (1) by assigning at least one superfunction or subfunction from the function catalogue selection (650) to an individual pointing gesture (4) of the user (1) with subsequent storing, in particular with at least temporary effectiveness.

7. Method according to one of the preceding claims, **characterized in that**, at least between one step (200-500) to be performed and a next step (300-600) to be performed, a further time-delaying step (700) is included, wherein a timer with a predefined time period is started, and in response to the running down of the timer, in particular between 0.5 and 20 seconds, the next step (400-700) to be performed is performed without delay.

8. Device for controlling a function of an application system (A1, A2, A3) of a means for transportation (10), in particular a motor vehicle, comprising:
- a signal detection unit (201), which is designed to detect an activation signal generated by the user,
- a sensor (401), which is designed to sense a pointing gesture (3) performed three-dimensionally in space by a user (4),
- an evaluation unit (501), which is designed to detect the sensed pointing gesture (4) and to automatically assign a spatial position (5) on and/or within the means of transportation (10) that is addressed by the pointing gesture (4), wherein the spatial position (5) addressed by the pointing gesture (4) is segmented on the basis of predefined 2D or 3D spatial segments (11-14, 31, 33, 41-43, 51, 53) in the form of seating positions (11-14) and is detected as a seating position (11-14), and
- a control unit (601), which is designed, in response thereto, to control and/or regulate the function in the form of an optimization of acoustic settings, specifically balance and/or fader, in accordance with the addressed spatial position (5), wherein the application system (A1, A2, A3) of the means of transportation (10)
- comprises an audio and/or entertainment system (A1).

9. Device according to Claim 8 of an application system (A1, A2, A3) of a means of transportation (10), which is designed to perform the method according to one of Claims 1 to 7.

10. Device according to either of Claims 8 and 9 or method according to one of Claims 1 to 7, wherein the sensor (401) comprises
- an optical sensing unit, in particular a camera system; and/or
- a sensing unit on the basis of other waves, preferably
- radio, and/or
- ultrasound, and/or
- thermal radiation; and/or
- a capacitive sensor.

11. Means of transportation (10) with a device according to one of Claims 8 to 10.

## Revendications

1. Procédé de pilotage d'une fonction d'un système d'application (A1, A2, A3) d'un moyen de transport (10), comprenant les étapes :
- la reconnaissance par capteur (200) d'un signal d'activation généré par l'utilisateur, à l'une unité de reconnaissance de signal (201),
- la reconnaissance par capteur (400) d'un geste d'indication (4) effectué en trois dimensions dans l'espace par un utilisateur (1) et détecté au moyen d'un capteur (401),
- l'association automatique (500) d'une position spatiale (5) adressée par le geste d'indication (4) sur et/ou dans le moyen de transport (10), la position spatiale (5) adressée par le geste d'indication (4) étant segmentée selon des segments spatiaux (11-14, 31, 33, 41-43, 51, 53) 2D ou 3D prédéfinis sous la forme de positions de siège (11-14) et étant reconnue comme une position de siège (11-14), et en réponse
- le pilotage (600) de la fonction sous la forme d'une optimisation de réglages acoustiques, notamment de la balance et/ou du fader, en fonction de la position spatiale adressée (5), le système d'application (A1, A2, A3) du moyen de transport (10) comprenant
- un système audio et/ou de divertissement (A1).

2. Procédé selon la revendication 1, comprenant en outre :
- la reconnaissance par capteur (410) d'une présence et/ou d'une position de partie du corps (20), en particulier d'une position de tête, d'au moins un passager (2), en particulier de l'utilisateur (1).

3. Procédé selon la revendication 2, dans lequel la fonction est optimisée quant à la position spatiale (5) et/ou à la position de partie du corps (20) d'un passager (2), en particulier de l'utilisateur (1).

4. Procédé selon l'une quelconque des revendications précédentes, dans lequel la position spatiale (5) adressée par le geste d'indication (4) est segmentée selon des segments spatiaux (11-14, 31, 33, 41-43, 51, 53) 2D ou 3D prédéfinis, et notamment
- dans une direction transversale verticale (z) : au moins en une zone de tête (51) et en une zone de pied (53).

5. Procédé selon l'une quelconque des revendications précédentes, dans lequel d'abord l'étape supplémentaire suivante est exécutée :
- l'association automatique (300) du signal d'activation à une sélection de catalogue de fonctions prédéfinie (650), **caractérisée par** une structure ordonnée avec des fonctions supérieures et inférieures, du au moins un système d'application (A1, A2, A3).

6. Procédé selon la revendication 5, dans lequel d'abord l'étape supplémentaire suivante est exécutée :
- la configuration individuelle (100) de la sélection de catalogue de fonctions prédéfinie (650) par au moins un utilisateur (1) en associant au moins une fonction supérieure ou inférieure parmi la sélection de catalogue de fonctions (650) à un geste d'indication individuel (4) de l'utilisateur (1) avec une sauvegarde consécutive, en particulier à effet au moins temporaire.

7. Procédé selon l'une quelconque des revendications précédentes, **caractérisé en ce qu'**une étape de temporisation supplémentaire (700) est comprise au moins entre une étape (200-500) à effectuer et une étape suivante (300-600) à effectuer, un temporisateur d'une durée prédéfinie étant démarré, et en réponse à une expiration du temporisateur, en particulier entre 0,5 à 20 secondes, l'étape suivante (400-700) à effectuer étant effectuée sans délai.

8. Dispositif permettant de piloter une fonction d'un système d'application (A1, A2, A3) d'un moyen de transport (10), en particulier d'un véhicule automobile, comprenant :
- une unité de reconnaissance de signal (201) qui est aménagée pour reconnaître un signal d'activation généré par l'utilisateur,
- un capteur (401) qui est aménagé pour détecter un geste d'indication (3) effectué en trois dimensions dans l'espace par un utilisateur (4),
- une unité d'évaluation (501) qui est aménagée pour reconnaître le geste d'indication détecté (4) et pour associer automatiquement une position spatiale (5) adressée par le geste d'indication (4) sur et/ou dans le moyen de transport (10), la position spatiale (5) adressée par le geste d'indication (4) étant segmentée selon des segments spatiaux (11-14, 31, 33, 41-43, 51, 53) 2D ou 3D prédéfinis sous la forme de positions de siège (11-14) et étant reconnue comme une position de siège (11-14), et
- une unité de commande (601) qui en réponse est aménagée pour piloter et/ou régler la fonction sous la forme d'une optimisation de réglages acoustiques, notamment de la balance et/ou du fader, en fonction de la position spatiale adressée (5),
le système d'application (A1, A2, A3) du moyen de transport (10) comprenant
- un système audio et/ou de divertissement (A1).

9. Dispositif selon la revendication 8 d'un système d'application (A1, A2, A3) d'un moyen de transport (10), qui est aménagé pour exécuter le procédé selon l'une quelconque des revendications 1 à 7.

10. Dispositif selon l'une quelconque des revendications 8 à 9 ou procédé selon l'une quelconque des revendications 1 à 7, le capteur (401) comprenant
- une unité de détection optique, en particulier un système de caméra ; et/ou
- une unité de détection basée sur d'autres ondes, de préférence
- radioélectriques, et/ou
- ultrasonores, et/ou
- de rayonnement thermique ; et/ou
- un capteur capacitif.

11. Moyen de transport (10) comprenant un dispositif selon l'une quelconque des revendications 8 à 10.
